# EUROPEAN PATENT SPECIFICATION

(11) **EP 2 769 531 B1**
(45) Date of publication and mention of the grant of the patent: **13.12.2017**
(21) Application number: 11874441.6
(22) Date of filing: 21.10.2011
(51) Int. Cl.: H04L 29/12, H04L 29/02, H04L 12/40

(54) **INTEGRATED CIRCUIT DEVICE, CONTROLLER AREA NETWORK DRIVER MODULE AND METHOD THEREFOR**
INTEGRIERTE SCHALTKREISVORRICHTUNG, TREIBERMODUL FÜR EIN STEUERUNGSBEREICHSNETZWERK UND VERFAHREN DAFÜR
DISPOSITIF DE CIRCUIT INTÉGRÉ, MODULE PILOTE DE RÉSEAU CAN (CONTROLLER AREA NETWORK) ET PROCÉDÉ ASSOCIÉ

(43) Date of publication of application: 27.08.2014
(73) Proprietor: NXP USA, Inc., Austin TX 78735 (US)
(72) Inventor: HUOT-MARCHAND, Alexis, F-31470 Fonsorbes (FR); BESSE, Patrice, F-31170 Tournefeuille (FR); CREVEAU-BOURY, Stephanie, F-31100 Toulouse (FR); DELAGE, Murielle, F-31470 Fonsorbes (FR)
(74) Representative: Freescale law department - EMEA patent ops
(86) International application number: PCT/IB2011/003355
(87) International publication number: WO 2013/057537

(56) References cited:
- US-A1- 2004 052 024
- US-A1- 2008 144 241
- US-A1- 2008 306 663
- US-A1- 2009 245 344
- US-A1- 2010 027 173
- US-B2- 7 218 497
- US-B2- 7 773 715
- US-B2- 8 022 505

## Description

### Field of the invention

The field of this invention relates to an integrated circuit device, a controller area network (CAN) driver module and a method therefor.

### Background of the invention

Controller Area Network (CAN or CAN-bus) is a vehicle bus standard that is designed to allow microcontrollers and devices to communicate with each other within a vehicle without a need for ahost computer. CAN is a message-based protocol that is designed specifically for automotive applications but which is now also used in other technology areas, such as industrial automation, medical equipment, etc.

It is known to use a common-mode choke with a CAN bus line in order to improve the electro-magnetic environment for the CAN bus transceiver components. However, the use of such a common-mode choke increases the inductance of the CAN bus line. Consequently, when a short circuit or the like occurs, for example at or around maximum or minimum battery voltages (e.g. 40V and -27V respectively), if the CAN bus line is in a dominant mode (i.e. being driven by a CAN transceiver), a large current will be driven onto the CAN bus line. This large current causes the inductance of that CAN bus line (created by cables, common-mode chokes, etc.) to be charged with a large amount of energy. Such a short circuit may be referred to as an inductive short circuit.

When the CAN bus line subsequently switches to a recessive mode (i.e. is no longer being driven), the large amount of energy stored within the inductance of that CAN bus line creates a voltage peak that can cause ESD (electro-static discharge) protection devices coupled to the CAN bus line to go into their snapback region of operation. Such snapback protection is typically required within ESD protection in order to sustain very large ESD GUN stress currents (30A). However, the energy stored within the inductance of the CAN bus line following an inductive short circuit results in a large current flowing there through, which can damage those ESD protection devices that have transitioned into their snapback region.

ISO specification 11898 specifies that a CAN system must be sufficiently robust to withstand any short circuit at 40V and -27V. Significantly, the rising/falling edges of the voltages and currents that result from the above short circuit events are typically in the order of nano-seconds. As such, complex clamp circuitry for sinking the current flowing through the inductance of the CAN bus line is typically not fast enough in reacting to such events to prevent damage to ESD protection devices.

The patent application document US2004/052024 discloses a fuse box for a power distribution system within a vehicle.

### Summary of the invention

The present invention provides an integrated circuit device, a controller area network (CAN) driver module, and a method of driving a control area network (CAN) bus line as described in the accompanying claims.

Specific embodiments of the invention are set forth in the dependent claims.

These and other aspects of the invention will be apparent from and elucidated with reference to the embodiments described hereinafter.

### Brief description of the drawings

Further details, aspects and embodiments of the invention will be described, by way of example only, with reference to the drawings. In the drawings, like reference numbers are used to identify like or functionally similar elements. Elements in the figures are illustrated for simplicity and clarity and have not necessarily been drawn to scale.
FIG. 1 illustrates a simplified block diagram of an example of a controller area network.
FIG. 2 illustrates a simplified block diagram of an example of a controller area network driver module.
FIG. 3 illustrates a simplified block diagram of an example of an ESD protection component.
FIG. 4 illustrates a simplified flowchart of an example a method of driving a control area network.

### Detailed description

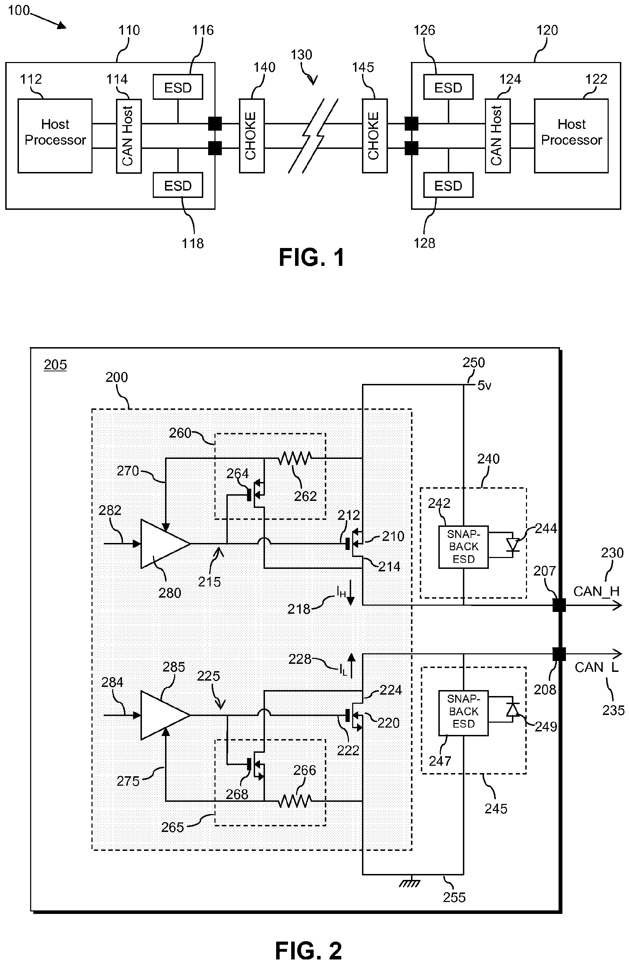

Referring first to FIG. 1, there is illustrated a simplified block diagram of an example of a controller area network (CAN) 100. The CAN 100 comprises a plurality of CAN devices. For simplicity only two CAN devices 110, 120 are illustrated, and are operably coupled to one another via a CAN bus line 130. In the illustrated example, the CAN bus line 130 comprises a pair of bus lines arranged to convey differential signals between CAN devices 110, 120. In the illustrated example, each CAN device 110, 120 comprises a host processor 112, 122 for providing CAN device functionality, etc. Each CAN device 110, 120 further comprises a CAN host component 114, 124 arranged to enable the respective host processor 112, 122 to communicate via the CAN bus line 130. Each CAN device 110, 120 further comprises electrostatic discharge (ESD) protection components 116, 118, 126, 128 operably coupled to each of the CAN bus lines 130. The ESD protection components 116, 118 are arranged to protect the respective CAN host component 114, 124 from ESD voltage spikes etc. occurring on the CAN bus line 130.

It is known to use a common-mode choke with a CAN bus line 130 in order to improve the electro-magnetic environment for the transceiver elements within the CAN host components 114, 124, in particular within the automotive industry. Accordingly, such common-mode chokes have been illustrated at 140, 145 in FIG. 1. The use of such common-mode chokes 140, 145 increases the inductance of the CAN bus lines 130. Consequently, when a short circuit or the like occurs, for example at or around maximum or minimum battery voltages (e.g. 40V and -27V), if the CAN bus line 130 is in a dominated state (e.g. being driven by a CAN transceiver within one of the CAN hosts 114, 124), a large current will be driven onto the CAN bus line 130. This large current causes the inductance of that CAN bus line (for example created by cables, common-mode chokes, etc.) to be charged with a large amount of energy. Such a short circuit may be referred to as an inductive short circuit. When the CAN bus line 130 subsequently switches to being in a non-dominated state (e.g. it is no longer being driven), the large amount of energy stored within the inductance of that CAN bus line 130 creates a voltage peak that can cause the ESD protection components 116, 118 coupled to the CAN bus line 130 to go into their snapback region of operation.

The ESD protection components 116, 118 are typically designed to protect against high voltage spikes occurring over short periods of time. Accordingly, because of the relatively short duration of such voltage spikes, the amount of energy required to be dissipated by the ESD protection components during such ESD events is relatively limited. In contrast, the energy that can be stored within the inductance of the CAN bus line 130, following an inductive short during a dominated state, can be significantly greater than that for a typical ESD event. As such, when the CAN bus line 130 subsequently switches to being in a non-dominated state, this large amount of stored energy can result in a large, sustained current flowing through the ESD protection components 116, 118, which can damage the ESD protection components 116, 118 since they have gone into their snapback region. In particular, if a short circuit voltage is higher than the snapback voltage of the ESD protection, there is no current limitation inside within the CAN bus line 130 or within the ESD protection. As such, once the ESD protection component 116, 118 is in a snapback region, current inside the CAN bus line 130 and the ESD protection component 116, 118 increase dramatically until damage to the ESD protection components 116, 118 may occur.

Referring now to FIG. 2, there is illustrated a simplified block diagram of an example of a CAN driver module 200, such as may be implemented within one or more of the CAN host components 114, 124 of FIG. 1. In the illustrated example, the CAN driver module 200 forms a part of an integrated circuit device, illustrated generally at 205. In summary, the CAN driver module 200 comprises at least one driver component, the at least one driver component comprises at least one control input arranged to receive at least one control signal, and at least one output that is operably coupled to at least one CAN bus line, such as one of the lines of the CAN bus line 130 of FIG. 1, and arranged to controllably output a load current based at least partly on the received at least one control signal.

More specifically for the illustrated example, the CAN driver module 200 comprises a first driver component comprising a P-channel metal oxide semiconductor field effect transistor (P-MOSFET) 210 comprising a gate terminal 212 arranged to receive a first control signal 215 and a drain terminal 214 operably coupled to a first CAN bus line (CAN_H) 230, via a first external contact 207 of the integrated circuit device 205, and arranged to controllably output (at least a part of) a first load current (I_{H}) 218 based at least partly on the received first control signal 215.

The CAN driver module 200 in the illustrated example further comprises a second driver component comprising an N-channel metal oxide semiconductor field effect transistor (N-MOSFET) 220 comprising a gate terminal 222 arranged to receive a second control signal 225 and a drain terminal 224 operably coupled to a second CAN bus line (CAN_L) 235, via a second external contact 208 of the integrated circuit device 205, and arranged to controllably output (at least a part of) a second load current (I_{L}) 228 based at least partly on the received second control signal 225.

The integrated circuit device 205 further comprises at least one ESD protection component operably coupled to the at least one CAN bus line. More specifically for the illustrated example, the integrated circuit device further comprises a first ESD protection component 240 operably coupled to the first CAN bus line (CAN_H) 230, via the first external contact 207 of the integrated circuit device 205, and a second ESD protection component 245 operably coupled to the second CAN bus line (CAN_L) 235, via the second external contact 208 of the integrated circuit device 205. Each of the ESD protection components 240, 245 comprises at least one ESD protection element 242, 247 comprising snapback properties, such as a bipolar transistor, operably coupled between the respective CAN bus lines 230, 235 and a supply rail 250, and ground rail 255 of the semiconductor device 205. Such snapback protection enables very large ESD GUN stress currents (30A) to be sustained. For clarity, in the case of a bipolar transistor, snapback is a collector to emitter breakdown characteristic showing a negative resistance region. Activation of the snapback mode of operation leads to a drop in collector-emitter voltage, and to a large collector current. Each of the ESD protection components 240, 245 further comprises at least one non-snapback component, which in the illustrated example comprise diodes 244, 249, operably coupled in parallel across the at least one snapback element 242, 247. Examples of the invention are not limited to the use of diodes for implementing the non-snapback components, which may equally comprise any suitable alternative structure without snapback behaviour, or a snapback voltage greater than the short circuit voltage. In this manner, when a large voltage/current is experienced by one of the ESD protection components 240, 245, reverse breakdown occurs within the respective diode 244, 249, thereby enabling current to flow through the diode 244, 249, enabling the sinking of large currents, and in, thus, enabling the avoidance of the snapback ESD protection element 242, 247 from entering a snapback mode. In some examples, the diodes 244, 249 comprise a breakdown voltage less than that of the respective snapback ESD protection element 242, 247. In this manner, when a large voltage/current is experienced by one of the ESD protection components 240, 245, reverse breakdown occurs within the respective diode 244, 249 ahead of the respective snapback ESD protection element 242, 247.

The CAN driver module 200 further comprises at least one load current sensing component arranged to sense the load current output by the at least one driver component and to generate at least one load current signal comprising an indication of the load current output by the at least one driver component. In particular for the illustrated example, the CAN driver module 200 comprises a first load current sensing component 260 arranged to sense the first load current (I_{H}) 218 output (at least partly) by the first driver component 210, and to generate a first load current signal 270 comprising an indication of the first load current (I_{H}) 218 output (at least partly) by the first driver component 210. The CAN driver module 200 illustrated in FIG. 2 further comprises a second load current sensing component 260 arranged to sense the second load current (I_{L}) 228 output (at least partly) by the second driver component 220, and to generate a second load current signal 275 comprising an indication of the second load current (I_{L}) 228 output (at least partly) by the second driver component 220.

Each load current sensing component 260, 265 in the illustrated example comprises a sense resistance element 262, 266 through which at least a part of the respective load current (I_{H}) 218, (I_{L}) 228 flows. In this manner, a voltage across the resistance element 262, 266 provides the indication of the respective load current (I_{H}) 218, (I_{L}) 228. Each load current sensing component 260, 265 further comprises a MOSFET 264, 268 complimentary to the MOSFET 210, 220 of the respective driver component; the current sensing component MOSFET 264, 268 being operably coupled in series with the respective sense resistance element 262, 266, and arranged to receive at a gate terminal thereof the respective control signal 215, 225. In this manner, the current sensing component MOSFET 264, 268 is arranged to control the flow of current through the sense resistance element 262, 266 in a complimentary manner to the control of the flow of current through the MOSFET 210, 220 of the respective driver component. The sense resistance element 262, 266 and current sensing component MOSFET 264, 268 are operably coupled in parallel with the MOSFET 210, 220 of the respective driver component. Thus, the current flowing through the sense resistance element 262, 266 is arranged to be substantially proportional to the current flowing through the MOSFET 210, 220 of the respective driver component. In this manner, the respective load current (I_{H}) 218, (I_{L}) 228 comprises a combination of the currents flowing through the respective MOSFET devices 210 and 264, and 220 and 268.

In some examples, alternative current sensing arrangements may be equally implemented within the load current sensing components 260, 265. For example, each load current sensing component 260, 265 may alternatively comprise, say, one or more sense transistor arrangements or the like.

The CAN driver module 200 further comprises at least one load current limiting component arranged to receive the at least one load current signal generated by the at least one load current sensing component and to cause the at least one driver component to at least partially restrict the load current output thereby, if the at least one load current signal indicates the load current exceeds a threshold. In particular for the illustrated example, the CAN driver module 200 comprises a first load current limiting component 280 that is arranged to receive the first load current signal 270 generated by the first load current sensing component 260 and comprising at least an indication of the first load current (I_{H}) 218 output (at least partly) by the first driver component 210. The first load current limiting component 280 is arranged to cause the first driver component 210 to at least partially restrict the load current output thereby if the first load current signal 270 indicates that the first load current (I_{H}) 218 exceeds a threshold. The first load current limiting component 280 may be arranged to compare the received first load current signal 270 to, say, a reference signal 282, and if the first load current signal 270 is, say, less than the reference signal 282, to determine that the first load current (I_{H}) 218 exceeds the respective threshold. For the illustrated example, the first load current limiting component 280 is arranged to output the first control signal 215 that is provided to the MOSFET 210 of the respective driver component (and to the respective current sensing component MOSFET 264). This may cause the MOSFET 210 of the respective driver component (and the respective current sensing component MOSFET 264) to at least partially restrict the first load current (I_{H}) 218 output thereby by configuring the first control signal 215 accordingly.

The CAN driver module 200 in the illustrated example further comprises a second load current limiting component 285 arranged to receive the second load current signal 275 generated by the second load current sensing component 265 and comprising at least an indication of the second load current (I_{L}) 228 output (at least partly) by the second driver component 220. The second load current limiting component 285 is arranged to cause the second driver component 220 to at least partially restrict the load current output thereby, if the second load current signal 275 indicates that the second load current (I_{L}) 228 exceeds a threshold. The second load current limiting component 285 may also be arranged to compare the received second load current signal 275 to, say, a reference signal 284, and if the second load current signal 275 is less than the reference signal 284, to determine that the second load current (I_{L}) 228 exceeds the respective threshold. For the illustrated example, the second load current limiting component 285 is arranged to output the second control signal 225 provided to the MOSFET 220 of the respective driver component (and to the respective current sensing component MOSFET 268), and may cause the MOSFET 220 of the respective driver component (and to the respective current sensing component MOSFET 268) to at least partially restrict the second load current (I_{L}) 228 output thereby, by configuring the second control signal 225 accordingly.

In some examples, the load current limiting components 280, 285 may form at least a part of a series of respective driver controllers (not shown) for controlling the respective driver component 210, 220 to transmit signals across the CAN bus lines 230, 235, for example in response to signals received from the host processor 112.

Thus, an example of a CAN driver module 200 has been described that comprises load current sensing components 260, 265 arranged to sense the load currents (I_{H}) 218, (I_{L}) 228 output by the driver components 210, 220 of the CAN driver module 200 and to generate load current signals 270, 275 comprising indications of the respective load currents (I_{H}) 218, (I_{L}) 228. In addition, the CAN driver module 200 further comprises load current limiting components 280, 285 arranged to receive the respective load current signals 270, 275 generated by the load current sensing components 260, 265 and to cause the driver components 210, 220 to at least partially restrict the respective load currents (I_{H}) 218, (I_{L}) 228 output thereby if the load current signals 270, 275 indicate that the load currents (I_{H}) 218, (I_{L}) 228 exceed a threshold.

In this manner, by causing the driver components 210, 220 to at least partially restrict the load currents (I_{H}) 218, (I_{L}) 228 output thereby, when the load currents exceed a threshold, the load currents output by the driver components 210, 220 onto the respective CAN bus lines 230, 235 are limited. Accordingly, in the event of a short circuit or the like on a CAN bus line 230, 235 when the CAN driver module 200 is driving signals onto the CAN bus lines 230, 235 (e.g. is in a dominant mode), the amount of current that is able to flow onto the CAN bus lines 230, 235 is limited. In this manner, the amount of energy that may be stored within inductances on the CAN bus lines 230, 235, for example such inductances being as a result of common-mode chokes, such as those illustrated at 140 and 145 in FIG. 1, and the inherent inductances of wire cables that are used to implement the CAN bus lines 230, 235, etc., is also limited.

Advantageously, by limiting the amount of energy that is stored within such inductances on the CAN bus lines 230, 235, the amount of energy that will subsequently need to be dissipated following the CAN driver module 200 subsequently switching to a recessive mode will also be reduced.

In addition to limiting the load currents (I_{H}) 218, (I_{L}) 228 output by the CAN driver module 200, the ESD protection components 240, 245 comprise the (non-snapback protection elements) diodes 244, 249 in parallel with the snapback ESD protection elements 242, 247 comprising snapback properties, whereby the (non-snapback protection elements) diodes 244, 249 comprise breakdown voltages less than the breakdown voltages of the snapback ESD protection elements 242, 247 comprising snapback properties. In this manner, the (non-snapback protection elements) diodes 244, 249 enable the full energy that is required to be dissipated following an inductive short circuit to be sunk there through. As a result, the amount of current that the ESD protection components 240, 245, are able to sink following such an inductive short circuit without causing damage to the snapback ESD protection elements 242, 247 comprising snapback properties, is significantly increased.

In particular, the combination of the load currents (I_{H}) 218, (I_{L}) 228 output by the CAN driver module 200 being limited, and thus the amount of energy stored following an inductive short during a dominant state on the CAN bus line 130 being limited, and the increase in the amount of current that may be sunk through the snapback ESD protection components 240, 245, enables the energy stored following such an inductive short to be safely dissipated without a need for additional (complex) clamp circuits. Accordingly, an effective arrangement has been described for sinking the current flowing through the inductance of the CAN bus line 130 that is capable of reacting in a sufficiently fast enough manner to prevent damage to ESD protection devices, and without a need for an additional clamp circuit.

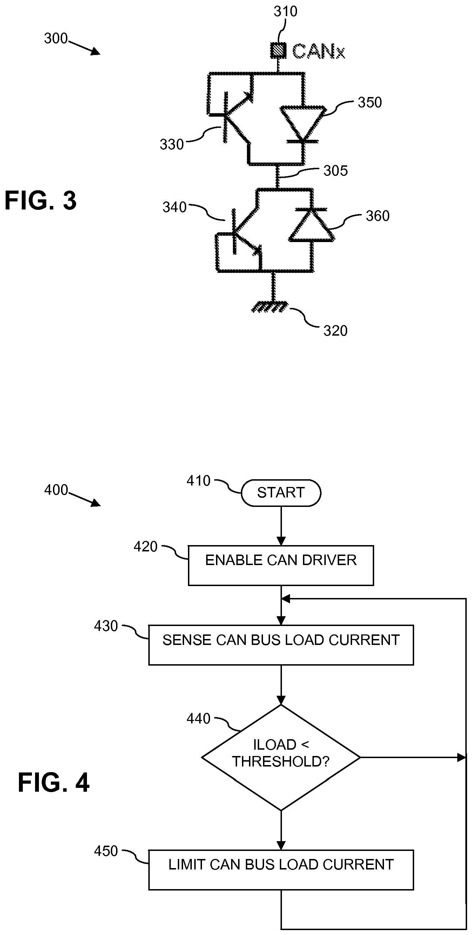

Referring now to FIG. 3, there is illustrated a simplified block diagram of an example of an ESD protection component 300, such as may be implemented within the ESD protection components 240, 245 of FIG. 2. In the example illustrated in FIG. 3, the ESD protection component 300 is operably coupled between a CAN bus line 310 and a power supply rail 320 of, for example illustrated in FIG. 2, the integrated circuit device 205. In the example illustrated in FIG. 3, the power supply rail 320 is illustrated as comprising a ground supply rail 320. However, in some alternative examples the power supply rail 320 may comprise a positive or negative voltage supply rail. The ESD protection component 300 illustrated in FIG. 3 comprises a first ESD protection element 330 comprising snapback properties, and a second ESD protection element 340 comprising snapback properties operably coupled in series between the CAN bus line 310 and the power supply rail 320. In the illustrated example of FIG. 3, each of the ESD protection elements 330, 340 comprising snapback properties comprises a bipolar transistor. The ESD protection component 300 further comprises a first non-snapback protection element, in a form of a diode 350, operably coupled in parallel with the first bipolar transistor 330. The ESD protection component 300 still further comprises a second non-snapback protection element, in a form of a diode 360, operably coupled in parallel with the second bipolar transistor 340. In this manner, the first bipolar transistor 330 and the first diode 350 are operably coupled in parallel between the CAN bus line 310 and a node 305; and the second bipolar transistor 340 and the second diode 360 are operably coupled in parallel between the node 305 and the supply rail 320. In some examples, the breakdown voltages of the diodes 350, 360 are arranged to be less than the breakdown voltages of their respective bipolar transistors 330, 340.

Specifically, the bipolar transistor/diode pairs are oriented to comprise opposing polarities. In this manner, when a positive voltage/current is experienced at the CAN bus line 310, the orientation of the first diode 350 and bipolar transistor 330 is such that current is able to flow there through from the CAN bus line 310 to the node 305. If the positive voltage exceeds the breakdown voltage of the second diode, a reverse breakdown occurs within the diode allowing current to flow there through to the supply rail. In this manner, when a sufficiently high voltage occurs at the node 305 to exceed the breakdown voltage of the second diode 360, the reverse breakdown that occurs in the second diode 360 allows current to be sunk from the CAN bus line 310, via the first diode 350 and bipolar transistor 330. Once current is allowed to flow through the second diode 360, the voltage at the node 305 will reduce before it reaches the snapback voltage of the bipolar transistor 340.

Conversely, if a negative voltage/current is experienced at the CAN bus line 310, a voltage drop will be created across the first bipolar transistor 330 and the first diode 350. If the voltage drop across the first bipolar transistor 330 and the first diode 350 exceeds the breakdown voltage of the first diode 350, a reverse breakdown occurs within the diode, thereby allowing current to flow there through to the CAN bus line 310. The orientation of the second diode 360 and bipolar transistor 340 is such that current is able to flow there through from the supply rail 320 to the node 305, In this manner, when a sufficiently high voltage occurs across the first bipolar transistor 330 and the first diode 350, to exceed the breakdown voltage of the first diode 350, the reverse breakdown that occurs in the first diode 350 allows current to be sourced from the supply rail 320, via the second diode 360 and bipolar transistor 340. Once current is allowed to flow through the first diode 350, the voltage across the bipolar transistor 330 will reduce before it reaches the snapback voltage of the bipolar transistor 330.

Referring now to FIG. 4 there is illustrated a simplified flowchart 400 of an example of a method of driving a control area network (CAN) bus line, such as may be implemented within the CAN driver module 200 of FIG. 2. The method starts at 410, and moves on to 420 where a CAN driver for the CAN bus line is enabled; as such the CAN bus line subsequently comprises a dominated state. Next, at 430, a load current for the CAN bus line is sensed, and compared to a threshold value at 440, in order to determine whether the load current of the CAN bus line exceeds the threshold. If it is determined that the load current of the CAN bus line does exceed the threshold, in 440, the method moves on to 450 where the load current is at least partially restricted in order to limit the load current. The method then loops back to 430. Conversely, if at 440 it is determined that the load current of the CAN bus line does not exceed the threshold, the method loops directly back to 430.

Because the illustrated embodiments of the present invention may for the most part, be implemented using electronic components and circuits known to those skilled in the art, details will not be explained in any greater extent than that considered necessary as illustrated above, for the understanding and appreciation of the underlying concepts of the present invention and in order not to obfuscate or distract from the teachings of the present invention.

In the foregoing specification, the invention has been described with reference to specific examples of embodiments of the invention. It will, however, be evident that various modifications and changes may be made therein without departing from the broader scope of the invention as set forth in the appended claims.

The connections as discussed herein may be any type of connection suitable to transfer signals from or to the respective nodes, units or devices, for example via intermediate devices. Accordingly, unless implied or stated otherwise, the connections may for example be direct connections or indirect connections. The connections may be illustrated or described in reference to being a single connection, a plurality of connections, unidirectional connections, or bidirectional connections. However, different embodiments may vary the implementation of the connections. For example, separate unidirectional connections may be used rather than bidirectional connections and vice versa. Also, plurality of connections may be replaced with a single connection that transfers multiple signals serially or in a time multiplexed manner. Likewise, single connections carrying multiple signals may be separated out into various different connections carrying subsets of these signals. Therefore, many options exist for transferring signals.

Although specific conductivity types or polarity of potentials have been described in the examples, it will be appreciated that conductivity types and polarities of potentials may be reversed.

Any arrangement of components to achieve the same functionality is effectively 'associated' such that the desired functionality is achieved. Hence, any two components herein combined to achieve a particular functionality can be seen as 'associated with' each other such that the desired functionality is achieved, irrespective of architectures or intermediary components. Likewise, any two components so associated can also be viewed as being 'operably connected', or 'operably coupled', to each other to achieve the desired functionality.

Furthermore, those skilled in the art will recognize that boundaries between the above described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments.

Also, the invention is not limited to physical devices or units implemented in non-programmable hardware but can also be applied in programmable devices or units able to perform the desired device functions by operating in accordance with suitable program code, such as mainframes, minicomputers, servers, workstations, personal computers, notepads, personal digital assistants, electronic games, automotive and other embedded systems, cell phones and various other wireless devices, commonly denoted in this application as 'computer systems'.

However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms 'a' or 'an', as used herein, are defined as one or more than one. Also, the use of introductory phrases such as 'at least one' and 'one or more' in the claims should not be construed to imply that the introduction of another claim element by the indefinite articles 'a' or 'an' limits any particular claim containing such introduced claim element to inventions containing only one such element, even when the same claim includes the introductory phrases 'one or more' or 'at least one' and indefinite articles such as 'a' or 'an'. The same holds true for the use of definite articles. Unless stated otherwise, terms such as 'first' and 'second' are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

## Claims

1. A controller area network, CAN, driver module (200), comprising:
at least one driver component (210, 220), the at least one driver component comprising at least one control input (212, 222) arranged to receive at least one control signal (215, 225), and at least one output (214, 224) for coupling to at least one CAN bus line (230, 235) and arranged to controllably output a load current (218, 228) based at least partly on the received at least one control signal; and
at least one electrostatic discharge, ESD, protection component (240, 245) which can be operably coupled to the at least one CAN bus line,
the CAN driver module **characterised in that** the CAN driver module further comprises:
at least one load current sensing component (260, 265) arranged to sense the load current output by the at least one driver component and to generate at least one load current signal (270, 275) comprising an indication of the load current output by the at least one driver component; and
at least one load current limiting component (280, 285) arranged to receive the at least one load current signal generated by the at least one load current sensing component and to cause the at least one driver component to at least partially restrict the load current output thereby if the at least one load current signal indicates that the load current exceeds a threshold,
the CAN driver module further **characterised in that** the at least one ESD protection component comprises at least one ESD protection element (242, 247) comprising at least one snapback property and at least one non-snapback protection element (244, 249) operably coupled in parallel across the at least one ESD protection element; the at least one non-snapback protection element comprising a breakdown voltage that is less than a breakdown voltage of the at least one ESD protection element.

2. The module of Claim 1, wherein the at least one non-snapback protection element of the at least one ESD protection component comprises at least one diode comprising a breakdown voltage that is less than that of the at least one ESD protection element comprising the at least one snapback property.

3. The module of any preceding Claim, wherein the at least one ESD protection element comprises at least one bipolar transistor.

4. The module of any preceding Claim, wherein the at least one load current sensing component comprises at least one sense resistance element (262, 266) through which at least a part of the at least one load current is arranged to flow.

5. The module of Claim 4, wherein the at least one load current signal is based at least partly on a voltage across the at least one sense resistance element.

6. The module of any preceding Claim, wherein the at least one load current limiting component is arranged to output the at least one control signal provided to the at least one driver component, and to cause the at least one driver component to at least partially restrict the at least one load current output thereby by configuring the at least one control signal accordingly.

7. The module of any preceding Claim, wherein the at least one load current limiting component is arranged to compare the at least one load current signal to a reference signal (282, 284), and determine whether the at least one load current signal that indicates the load current exceeds a threshold based at least partly on a comparison of the at least one load current signal to the reference signal.

8. The module of any preceding Claim, wherein the at least one driver component comprises at least one metal oxide semiconductor field effect transistor comprising a gate terminal arranged to receive the at least one control signal and a drain terminal operably coupled to the at least one CAN bus line and arranged to controllably output at least a part of the at least one load current based at least partly on the received at least one control signal.

9. The module of Claim 8, wherein the at least one CAN driver module comprises a first driver component comprising a P-channel metal oxide semiconductor field effect transistor, P-MOSFET, comprising a gate terminal arranged to receive a first control signal and a drain terminal operably coupled to a first CAN bus line (CAN_H).

10. The module of Claim 9, wherein the first driver component is arranged to controllably output, at least a part of a first load current (I_{H}) based at least partly on the received first control signal.

11. The module of any of preceding Claims 9 to 10, wherein the at least one CAN driver module further comprises a second driver component comprising an N-channel metal oxide semiconductor field effect transistor, N-MOSFET, comprising a gate terminal arranged to receive a second control signal and a drain terminal operably coupled to a second CAN bus line (CAN_L).

12. The module of Claim 11, wherein the second driver component is arranged to controllably output, at least a part of a second load current (I_{L}) based at least partly on the received second control signal.

13. A module comprising, as claimed in any one of the preceding Claims implemented in a single integrated circuit.

14. A method of driving a control area network, CAN, bus line carried out by a CAN driver module according to any one of the preceding claims 1 to 13, the method comprising:
sensing a load current of the CAN bus line;
determining whether the load current of the CAN bus line exceeds a threshold; and
at least partially restricting the load current of the CAN bus line if it is determined that the load current of the CAN bus line exceeds a threshold.

## Patentansprüche

1. Ein Steuergerätenetz, CAN, Treibermodul (200) aufweisend:
zumindest eine Treiberkomponente (210, 220), wobei die zumindest eine Treiberkomponente aufweist
zumindest einen Steuereingang (212, 222), welcher eingerichtet ist zumindest ein Steuersignal (215, 225) zu empfangen, und
zumindest einen Ausgang (214, 224) zum Koppeln mit zumindest einer CAN Busleitung (230, 235), welcher eingerichtet ist zum steuerbaren Ausgeben eines Laststroms (218, 228) basierend zumindest teilweise auf dem empfangenen zumindest einen Steuersignal; und
zumindest eine elektrostatische Entladung, ESD, Schutzkomponente (240, 245), welche betreibbar mit der zumindest einen CAN Busleitung gekoppelt werden kann,
wobei das CAN Treibermodul **dadurch gekennzeichnet ist, dass** das CAN Treibermodul ferner aufweist:
zumindest eine Laststrom Abtastkomponente (260, 265), welche eingerichtet ist
den Laststrom, welcher mittels der zumindest einen Treiberkomponente ausgegeben wird, abzutasten, und
zumindest ein Laststrom Signal (270, 275) zu generieren, welches ein Anzeichen für den Laststrom aufweist, welcher mittels der zumindest einen Treiberkomponente ausgegeben wird; und
zumindest eine Laststrom Begrenzungskomponente (280, 285), welche eingerichtet ist
das zumindest eine Laststrom Signal zu empfangen, welches mittels der zumindest einen Laststrom Abtastkomponente generiert wird, und
die zumindest eine Treiberkomponente auszulösen zumindest teilweise den dabei ausgegebenen Laststrom zu begrenzen, falls das zumindest eine Laststrom Signal anzeigt, dass der Laststrom einen Grenzwert überschreitet,
wobei das CAN Treibermodul ferner **dadurch gekennzeichnet ist, dass** die zumindest eine ESD Schutzkomponente aufweist
zumindest ein ESD Schutzelement (242, 247), welches zumindest eine Rückschnapp Eigenschaft aufweist, und
zumindest ein nicht Rückschnapp Schutzelement (244, 249), welches betreibbar parallel über das zumindest eine ESD Schutzelement gekoppelt ist;
wobei das zumindest eine nicht Rückschnapp Schutzelement eine Durchschlagspannung aufweist, welche geringer ist als eine Durchschlagspannung des zumindest einen ESD Schutzelements.

2. Das Modul gemäß Anspruch 1,
wobei das zumindest eine nicht Rückschnapp Schutzelement der zumindest einen ESD Schutzkomponente zumindest eine Diode aufweist, welche eine Durchschlagspannung aufweist, die geringer ist als diejenige des zumindest einen ESD Schutzelements, welches die zumindest eine Rückschnapp Eigenschaft aufweist.

3. Das Modul gemäß einem beliebigen vorangehenden Anspruch,
wobei das zumindest eine ESD Schutzelement zumindest einen Bipolartransistor aufweist.

4. Das Modul gemäß einem beliebigen vorangehenden Anspruch,
wobei die zumindest eine Laststrom Abtastkomponente zumindest ein abtastresistentes Element (262, 266) aufweist, durch das zumindest ein Teil des zumindest einen Laststroms eingerichtet ist zu fließen.

5. Das Modul gemäß Anspruch 4,
wobei das zumindest eine Laststrom Signal zumindest teilweise auf einer Spannung über das zumindest eine abtastresistente Element basiert.

6. Das Modul gemäß einem beliebigen vorangehenden Anspruch,
wobei die zumindest eine Laststrom Begrenzungskomponente eingerichtet ist das zumindest eine Steuersignal auszugeben, welches an der zumindest einen Treiberkomponente bereitgestellt ist, und
die zumindest eine Treiberkomponente auszulösen zumindest teilweise den dabei ausgegebenen Laststrom zu begrenzen mittels entsprechenden Konfigurierens des zumindest einen Steuersignals.

7. Das Modul gemäß einem beliebigen vorangehenden Anspruch,
wobei die zumindest eine Laststrom Begrenzungskomponente eingerichtet ist das zumindest eine Laststromsignal mit einem Referenzsignal (282, 284) zu vergleichen und zu bestimme, ob das zumindest eine Laststrom Signal, das den Laststrom anzeigt, einen Grenzwert übersteigt, welcher zumindest teilweise auf einem Vergleich des zumindest einen Laststrom Signals mit dem Referenzsignal basiert.

8. Das Modul gemäß einem beliebigen vorangehenden Anspruch,
wobei die zumindest eine Treiberkomponente zumindest einen Metall-Oxid-Halbleiter Feldeffekttransistor aufweist, welcher aufweist
einen Gate Anschluss, welcher eingerichtet ist das zumindest eine Steuersignal zu empfangen, und
einen Drain Anschluss, welcher betreibbar mit der zumindest einen CAN Busleitung gekoppelt ist, und welcher eingerichtet ist steuerbar zumindest einen Teil des zumindest einen Laststroms auszugeben, basierend zumindest teilweise auf dem empfangenen zumindest einen Steuersignal.

9. Das Modul gemäß Anspruch 8,
wobei das zumindest eine CAN Treibermodul eine erste Treiberkomponente aufweist, welche einen P-Kanal Metall-Oxid-Halbleiter Feldeffekttransistor, P-MOSFET, aufweist, welcher aufweist
einen Gate Anschluss, welcher eingerichtet ist ein erstes Steuersignal zu empfangen, und einen Drain Anschluss, welcher betreibbar mit einer ersten CAN Busleitung (CAN_H) gekoppelt ist.

10. Das Modul gemäß Anspruch 9,
wobei die erste Treiberkomponente eingerichtet ist steuerbar auszugeben zumindest einen Teil eines ersten Laststroms (I_{H}), welcher zumindest teilweise auf dem empfangenen ersten Steuersignal basiert.

11. Das Modul gemäß einem beliebigen der Ansprüche 9 bis 10,
wobei das zumindest eine CAN Treibermodul ferner eine zweite Treiberkomponente aufweist, welche einen N-Kanal Metall-Oxid-Halbleiter Feldeffekttransistor, N-MOSFET, aufweist, welcher aufweist
einen Gate Anschluss, welcher eingerichtet ist ein zweites Steuersignal zu empfangen, und einen Drain Anschluss, welcher betreibbar mit einer zweiten CAN Busleitung (CAN_L) gekoppelt ist.

12. Das Modul gemäß Anspruch 11,
wobei die zweite Treiberkomponente eingerichtet ist steuerbar auszugeben zumindest einen Teil eines zweiten Laststroms (I_{L}), welcher zumindest teilweise auf dem empfangenen zweiten Steuersignal basiert.

13. Ein Modul gemäß einem beliebigen der vorangehenden Ansprüchen, welches in einem einzelnen integrierten Schaltkreis implementiert ist.

14. Ein Verfahren zum Steuern einer Steuergerätenetz, CAN, Busleitung, ausgeführt mittels eines CAN Treibermoduls gemäß einem beliebigen der vorangehenden Ansprüche 1 bis 13,
wobei das Verfahren aufweist:
Abtasten eines Laststroms der CAN Busleitung;
Bestimmen, ob der Laststrom der CAN Busleitung einen Grenzwert übersteigt; und
zumindest teilweises Begrenzen des Laststroms der CAN Busleitung, falls bestimmt wurde, dass der Laststrom der CAN Busleitung einen Grenzwert übersteigt.

## Revendications

1. Module d'attaque de réseau CAN (Controller Area Network) (200), comprenant :
au moins un composant d'attaque (210, 220), ledit au moins un composant d'attaque comprenant au moins une entrée de commande (212, 222) agencée pour recevoir au moins un signal de commande (215, 225) et au moins une sortie (214, 224) pour le couplage à au moins une ligne de bus CAN (230, 235) et agencée pour délivrer de manière contrôlable un courant de charge (218, 228) sur la base au moins en partie dudit au moins un signal de commande reçu ; et
au moins un composant de protection contre les décharges électrostatiques, ESD, (240, 245) qui peut être couplé fonctionnellement à ladite au moins une ligne de bus CAN,
le module d'attaque de CAN étant **caractérisé en ce que** le module d'attaque de CAN comprend en outre :
au moins un composant de détection de courant de charge (260, 265) agencé pour détecter le courant de charge délivré par ledit au moins un composant d'attaque et pour générer au moins un signal de courant de charge (270, 275) comprenant une indication du courant de charge délivré par ledit au moins un composant d'attaque ;
et
au moins un composant de limitation de courant de charge (280, 285) agencé pour recevoir ledit au moins un signal de courant de charge généré par ledit au moins un composant de détection de courant de charge et pour amener ledit au moins un composant d'attaque à limiter au moins partiellement le courant de charge ainsi délivré si ledit au moins un signal de courant de charge indique que le courant de charge dépasse un seuil,
le module d'attaque de CAN étant **caractérisé en outre en ce que** ledit au moins un composant de protection contre les ESD comprend au moins un élément de protection contre les ESD (242, 247) comprenant au moins une propriété de retour à zéro et au moins un élément de protection sans retour à zéro (244, 249) couplé fonctionnellement en parallèle aux bornes dudit au moins un élément de protection contre les ESD ; ledit au moins un élément de protection sans retour à zéro comprenant une tension de claquage qui est inférieure à une tension de claquage dudit au moins un élément de protection contre les ESD.

2. Module selon la revendication 1, dans lequel ledit au moins un élément de protection sans retour à zéro dudit au moins un composant de protection contre les ESD comprend au moins une diode comprenant une tension de claquage inférieure à celle dudit au moins un élément de protection contre les ESD comprenant ladite au moins une propriété de retour à zéro.

3. Module selon l'une quelconque des revendications précédentes, dans lequel ledit au moins un élément de protection contre les ESD comprend au moins un transistor bipolaire.

4. Module selon l'une quelconque des revendications précédentes, dans lequel ledit au moins un composant de détection de courant de charge comprend au moins un élément de résistance de détection (262, 266) à travers lequel au moins une partie dudit au moins un courant de charge est agencée pour circuler.

5. Module selon la revendication 4, dans lequel ledit au moins un signal de courant de charge est basé au moins en partie sur une tension à travers ledit au moins un élément de résistance de détection.

6. Module selon l'une quelconque des revendications précédentes, dans lequel ledit au moins un composant de limitation de courant de charge est agencé pour délivrer ledit au moins un signal de commande fourni audit au moins un composant d'attaque, et pour amener ledit au moins un composant d'attaque à limiter au moins partiellement ledit au moins un courant de charge ainsi délivré en configurant ledit au moins un signal de commande en conséquence.

7. Module selon l'une quelconque des revendications précédentes, dans lequel le composant de limitation de courant de charge est agencé pour comparer ledit au moins un signal de courant de charge à un signal de référence (282, 284), et déterminer si ledit au moins un signal de courant de charge indique que le courant de charge dépasse un seuil sur la base au moins en partie d'une comparaison dudit au moins un signal de courant de charge au signal de référence.

8. Module selon l'une quelconque des revendications précédentes, dans lequel ledit au moins un composant d'attaque comprend au moins un transistor à effet de champ métal-oxyde-semi-conducteur comprenant une borne de grille agencée pour recevoir ledit au moins un signal de commande et une borne de drain couplée fonctionnellement à ladite au moins une ligne de bus CAN et agencée pour délivrer de manière contrôlable au moins une partie dudit au moins un courant de charge sur la base au moins en partie dudit au moins un signal de commande reçu.

9. Module selon la revendication 8, dans lequel ledit au moins un module d'attaque de CAN comprend un premier composant d'attaque comprenant un transistor à effet de champ métal-oxyde-semi-conducteur à canal P, P-MOSFET, comprenant une borne de grille agencée pour recevoir un premier signal de commande et une borne de drain couplé fonctionnellement à une première ligne de bus CAN (CAN_H).

10. Module selon la revendication 9, dans lequel le premier composant d'attaque est agencé pour délivrer de manière contrôlable au moins une partie d'un premier courant de charge (I_{H}) sur la base au moins en partie du premier signal de commande reçu.

11. Module selon l'une quelconque des revendications précédentes 9 à 10, dans lequel ledit au moins un module d'attaque de CAN comprend en outre un second composant d'attaque comprenant un transistor à effet de champ métal-oxyde-semi-conducteur à canal N, N-MOSFET, comprenant une borne de grille agencée pour recevoir un second signal de commande et une borne de drain couplée fonctionnellement à une seconde ligne de bus CAN (CAN_L).

12. Module selon la revendication 11, dans lequel le second composant d'attaque est agencé pour délivrer de manière contrôlable au moins une partie d'un second courant de charge (I_{L}) sur la base au moins en partie du second signal de commande reçu.

13. Module selon l'une quelconque des revendications précédentes, mis en oeuvre dans un circuit intégré unique.

14. Procédé d'attaque d'une ligne de bus de réseau CAN (Control Area Network), effectué par un module d'attaque de CAN selon l'une quelconque des revendications précédentes 1 à 13, le procédé comprenant de :
détecter un courant de charge de la ligne de bus CAN ;
déterminer si le courant de charge de la ligne de bus CAN dépasse un seuil ; et
limiter au moins partiellement le courant de charge de la ligne de bus CAN s'il est déterminé que le courant de charge de la ligne de bus CAN dépasse un seuil.
